# EUROPÄISCHE PATENTSCHRIFT

(11) **EP 1 599 424 B1**
(45) Veröffentlichungstag und Bekanntmachung des Hinweises auf die Patenterteilung: **07.11.2007**
(21) Anmeldenummer: 05715733.1
(22) Anmeldetag: 04.03.2005
(51) Int. Cl.: C03B 7/00

(54) **VERFAHREN UND VORRICHTUNG ZUR REGELUNG DER GLASTROPFENMASSE BEI DER HERSTELLUNG VON HOHLGLASBEHÄLTERN**
METHOD AND DEVICE FOR REGULATING THE GLASS GOB DURING THE PRODUCTION OF HOLLOW GLASS CONTAINERS
PROCEDE ET DISPOSITIF POUR REGULER LA MASSE DE GOUTTAGE DE VERRE LORS DE LA REALISATION DE RECIPIENTS EN VERRE CREUX

(30) Priorität: 10.03.2004 DE 102004011647
(43) Veröffentlichungstag der Anmeldung: 30.11.2005
(73) Patentinhaber: Heye International GmbH, 31683 Obernkirchen (DE)
(72) Erfinder: HARTMANN, Thomas, 31675 Bückeburg (DE); KRUMME, Manfred, 32457 Porta Westfalica (DE); WINKELHAKE, Dirk, 31688 Nienstädt (DE)
(74) Vertreter: Callies, Rainer Michael
(86) Internationale Anmeldenummer: PCT/EP2005/002302
(87) Internationale Veröffentlichungsnummer: WO 2005/087670

(56) Entgegenhaltungen:
- EP-A- 1 266 869
- US-A- 5 779 749
- PATENT ABSTRACTS OF JAPAN Bd. 015, Nr. 027 (C-0797), 22. Januar 1991 (1991-01-22) & JP 02 267125 A (HOYA CORP), 31. Oktober 1990 (1990-10-31)
- PATENT ABSTRACTS OF JAPAN Bd. 1997, Nr. 04, 30. April 1997 (1997-04-30) -& JP 08 333121 A (TOSHIBA GLASS CO LTD), 17. Dezember 1996 (1996-12-17)
- PATENT ABSTRACTS OF JAPAN Bd. 1999, Nr. 08, 30. Juni 1999 (1999-06-30) -& JP 11 060247 A (TOYO GLASS KIKAI KK), 2. März 1999 (1999-03-02)

## Beschreibung

Die Erfindung bezieht sich auf ein Verfahren und eine Vorrichtung nach dem Oberbegriff des Anspruchs 1 bzw. des Anspruchs 11.

Ein gattungsgemäßes Verfahren und eine gattungsgemäße Vorrichtung sind jeweils aus der EP 0 612 698 B1 und der US 6 272 885 B1 bekannt. Bei dem bekannten Verfahren bzw. der bekannten Vorrichtung sind mehrere Plunger, die jeweils einem von mehreren Tropfenauslässen zugeordnet sind, vorhanden. Es soll dabei eine größtmögliche Gleichförmigkeit der aus den verschiedenen Tropfenauslässen ausgegebenen Tropfen erreicht werden. Dazu ist ein Regelsystem vorgesehen, das zur Überwachung der vertikalen Position jedes Plungers dient und mit dem diese vertikalen Positionen in Abhängigkeit eines gemessenen Tropfengewichts individuell geregelt werden können. Jeder Plunger ist an einem individuellen Plungerhalter, der jeweils mit einem Antrieb verbunden ist, befestigt. Bei diesem Verfahren bzw. dieser Vorrichtung ist jedoch nicht vorgesehen, ein Sortiment von unterschiedlichen Hohlglasbehältern in einer I.S. (Individual Section)-Glasformmaschine herzustellen. Daher ist bei der bekannten Vorrichtung pro Plunger nur ein einziges Bewegungsprofil abgespeichert. Dieses kann, wenn erforderlich, korrigiert werden.

Die DE 100 18 270 A1 beschreibt eine Vorrichtung und ein Verfahren zum Erzeugen von Glas-Presslingen, wobei zwei Regelkreise in Bezug auf die Hublage und die Temperatur der Glasschmelze verwendet werden, um das Tropfengewicht konstant zu halten.

In der US 1 955 869 A ist eine Vorrichtung zur Herstellung von Glasposten mit unterschiedlichem Gewicht beschrieben. Dabei kann der untere Totpunkt des Plungers verändert werden mittels eines verschiebbaren Anschlags, der um die Kolbenstange des Plungers herum angeordnet ist und mit einem an der Kolbenstange befestigten Anschlag zusammenwirkt. Zudem kann eine Veränderung des unteren Totpunkts auch durch Einführen von Abstandsstücken zwischen dem verschiebbaren und dem festen Anschlag bewirkt werden. Zwar kann der verschiebbare Anschlag auch durch automatische Mittel - als Alternative zu einem Handrad - eingestellt werden, jedoch ist keine Regelung durch eine schrittweise Annäherung an die gewünschte Tropfenmasse durch entsprechenden Vergleich eines Istwertes mit einem Sollwert offenbart. Entsprechendes gilt für das beschriebene automatische Einführen der Abstandsstücke mittels einer pneumatischen Kolben-Zylinder-Einheit.

Ferner ist ein Speiser mit variablem Tropfengewicht für Behälterglas bekannt ("Elektronischer Feeder Typ TSE" der Firma J. Walter Co. Maschinen GmbH, 96352 Wilhelmsthal, Deutschland). Bei diesem für die Herstellung eines Sortiments von Hohlglasbehältern geeigneten Speiser können aufeinander folgend vier verschiedene Tropfengewichte erzeugt werden. Es sind z.B. zwei Plunger im Speiserkopf vorgesehen. Ein programmierbares Plunger-Bewegungsprofil kann durch Veränderung von Stützpunkten von einem Bediener über eine graphische Bedienoberfläche manuell modifiziert werden. Ebenso kann die Hublage eines Plungers verändert werden.

Darüber hinaus ist in der EP 0 668 248 A2 eine Vorrichtung zur gleichzeitigen Herstellung von unterschiedlich schweren Glasartikeln beschrieben. Zur Erzeugung unterschiedlicher Tropfengewichte werden unterschiedliche Bewegungsprofile des Plungers ausgeführt. Dies kann durch Veränderung von Bezugspositionen geschehen, die in einer Speichereinheit und mittels eines Repositionierungselements manuell veränderbar abgespeichert sind. Eine Regelung der Glastropfenmasse ist jedoch nicht offenbart.

Auch aus der EP 0 873 974 A2 ist an sich bekannt, ein Bewegungsprofil eines Plungers manuell durch Veränderung eines Stützpunkts des Bewegungsprofils zu modifizieren, wobei computergesteuert automatisch eine Anpassung von durch die Stützpunktveränderung betroffener Interpolationsabschnitte vorgenommen wird.

Die EP 1 266 869 A1 erwähnt allgemein die Möglichkeit, Glasposten unterschiedlicher Größe dadurch zu erzeugen, dass der Plunger in seiner zeitlichen Betätigung als auch in seinem Betätigungsweg gesteuert wird.

Die EP 1 422 200 A2, die nach dem Prioritätstag der vorliegenden Anmeldung veröffentlicht worden ist, betrifft eine Vorrichtung zur simultanen Herstellung von Glasprodukten unterschiedlicher Masse, wobei eine Änderung von verschiedenen Parametern des Bewegungsprofils eines Plungers vorgesehen ist. Jedoch weist auch diese Vorrichtung keine Regelung der Tropfenmasse auf.

Es ist bekannt (z.B. aus: Sonderdruck aus "Siemens-Zeitschrift", 51. Jahrgang, Heft 9, September 1977, S. 767-769) zur Gewährleistung eines konstanten Artikelgewichts eine Regeleinrichtung vorzusehen, mit der abhängig von dem Gewicht bzw. der Masse des geformten Artikels die axiale Position eines Drosselrohrs des Speiserkopfes verändert wird. Dabei kann das Artikelgewicht beispielsweise durch Wiegen bestimmt werden. Alternativ kann das Artikelgewicht auch über die Messung der Eindringtiefe eines Pressstempels beim Press-Blas-Verfahren geregelt werden (EP 0 652 854 B1). Durch Veränderung der axialen Position des Drosselrohrs wird die Höhe des Glasstandes im Inneren des Drosselrohrs und somit das pro Feederzyklus bzw. Zeiteinheit austretende Glasvolumen beeinflusst. Auf diese Weise können Störeinflüsse, wie z.B. eine Änderung der Glasviskosität oder des Höhenstandes der Glasschmelze, kompensiert werden. Nachteilig bei diesem Drosselrohr-Regelkreis ist jedoch, dass er wegen des großen Innenvolumens des Drosselrohrs relativ träge ist.

Auch das Bewegungsprofil des Plungers bzw. des zugehörigen Plungerhalters hat einen Einfluss auf die Masse bzw. Kontur eines durch den Tropfenauslass ausgegebenen Tropfens. So spielt beispielsweise eine Rolle, mit welcher Geschwindigkeit sich der Plunger von seiner unteren Endstellung wieder entfernt. Eine längere Stillstandsdauer des Plungers bzw. Plungerhalters in seiner unteren Endstellung bewirkt ein geringeres Artikelgewicht, weil der Plunger in seiner unteren Endstellung den für den Glasaustritt wirksamen Querschnitt des Tropfenauslasses in der Regel teilweise verschließt.

Für eine Produktion eines Sortiments von Hohlglasgegenständen unterschiedlichen Gewichts ist die oben beschriebene Positionsveränderung des Drosselrohrs aufgrund der damit verbundenen Trägheit nicht geeignet.

Eine manuelle Einstellung unterschiedlicher, aufeinander folgender Bewegungsprofile des Plungers mit dem Ziel, eine bestimmte Sequenz von unterschiedlichen Tropfengewichten zu erhalten, ist jedoch sehr schwierig bzw. nicht zufriedenstellend möglich, weil das Gewicht jedes Tropfens durch die Größe der vorher ausgegebenen Tropfen beeinflusst ist, also mit anderen Worten von der "Vorgeschichte" des Speiserbetriebs abhängt. Beispielsweise wird während der Produktion von einer Reihe von leichten Tropfen der Glasstand in dem Speiserkopf ansteigen, wenn vorher ein oder mehrere relativ schwere Tropfen erzeugt worden sind. Denn während der Sequenz der leichteren Tropfen fließt weniger Glas aus dem Speisekopf ab als während der vorhergehenden Sequenz von schwereren Tropfen. Die Folge wären unterschiedliche Gewichte der aus der Sequenz der leichteren Tropfen hergestellten Artikel, wenn nicht für jeden der leichteren, untereinander gleichen Tropfen ein anderes Plunger-Bewegungsprofil gewählt wird. Das Problem ist umso größer, je unterschiedlicher die vorgesehenen Tropfengewichte in einem Maschinenzyklus einer I.S. (Individual Section)-Glasformmaschine sind bzw. je weniger Symmetrie die Gewichtsfolge aufweist.

Der Erfindung liegt daher die Aufgabe zugrunde, ein gattungsgemäßes Verfahren zur Regelung der Glastropfenmasse zur Verfügung zu stellen, das für die Herstellung eines Sortiments von Hohlglasbehältern mittels einer I.S. (Individual Section)-Glasformmaschine geeignet ist. Ferner liegt der Erfindung die Aufgabe zugrunde, eine zur Durchführung dieses Verfahrens geeignete gattungsgemäße Vorrichtung vorzusehen.

Die Aufgabe bezüglich des Verfahrens wird durch die Merkmale des Anspruchs 1 gelöst. Das Sortiment von Hohlglasbehältern wird in der 1.S.-Glasformmaschine simultan hergestellt, d.h. innerhalb eines Maschinenzyklus werden in den einzelnen Sektionen Hohlglasgegenstände hergestellt, die zumindest teilweise verschiedene Gewichte aufweisen. Dazu sind für jeden Plunger so viele veränderbare Bewegungsprofile vorgesehen, wie es Sektionen gibt. Als Plunger-Bewegungsprofil werden hier Ort und Geschwindigkeit des Plungers bei seiner Auf- und Abbewegung bezeichnet. Es werden somit die Bewegungsprofile einer pro Plunger vorgesehenen Sequenz von Bewegungsprofilen, die entsprechend dem vorgesehenen Sortiment von Hohlglasbehältern unterschiedlich sind, nacheinander ausgeführt.

Wenn der verwendete Speiserkopf mehrere Plunger aufweist, z.B. zwei oder vier, und entsprechend viele Tropfen pro Feederzyklus erzeugt werden, die jeweils in dieselbe Sektion geführt werden, sind in der Regel gleich große Tropfen pro Sektion vorgesehen. Das heißt, dass sich in diesem Fall zwar die Bewegungsprofile mehrerer vorhandener Plunger für dieselbe Sektion unterscheiden, die Bewegungsprofile jedoch so ausgelegt sind, dass sie Tropfen gleicher Masse erzeugen.

Bei einer I.S.-Glasformmaschine, in welcher pro Sektion jeweils nur ein Tropfen verarbeitet wird, werden ein gemessener jeweiliger Tropfenmassenbezugs-Istwert und ein zugehöriger Tropfenmassenbezugs-Sollwert verglichen, indem eine Massenbezugswert-Differenz gebildet wird. Bei diesen drei Werten handelt es sich um Größen, die mit der Tropfenmasse in direktem Bezug stehen. Insbesondere kann es sich dabei um den Massen-Istwert, den Massen-Sollwert und eine aus diesen beiden Werten berechnete Massendifferenz handeln. Die Massenbezugswert-Differenz wird vorzugsweise aus einem einzelnen Tropfen bestimmt. Sie könnte jedoch auch von mehreren aufeinander folgenden Tropfen der Sektion bestimmt werden, indem ein Mittelwert der aufeinander folgenden Tropfen als Massenbezugs-Istwert verwendet wird, um so mögliche Ausreißer des Massenbezugs-Istwerts zu glätten. Wenn in der 1.S.-Glasformmaschine in jeder Sektion mehrere Tropfen gleichzeitig in mehreren Vorformstationen verarbeitet werden, wird die Bestimmung der Massenbezugswert-Differenz für jede Vorformstation der Sektion vorgenommen.

In Abhängigkeit der so bestimmten Massenbezugswert-Differenzen werden für jede Sektion die Bewegungsprofile der vorhandenen Plunger so verändert, dass eine schrittweise Annäherung des jeweiligen Massenbezugs-Istwerts an den Massenbezugs-Sollwert erfolgt, wenn für weitere Feederzyklen erneut jeweils die Bestimmung der Massenbezugswert-Differenz und die anschließende Veränderung des Bewegungsprofils durchgeführt werden.

Bei dem erfindungsgemäßen Verfahren können für jede Sektion getrennt und bei einem Mehrfachtropfenbetrieb auch für jede Vorformstation der Sektion die Tropfenmassen, die für die Herstellung eines Sortiments von Hohlglasbehältern benötigt werden, automatisch über die Zündfolge optimiert werden. Dies kann insbesondere während des laufenden Prozesses dynamisch geschehen. Das Verfahren kann für alle in der Praxis üblichen Tropfenanzahlen je Scherenschnitt verwendet werden.

Vorzugsweise wird nach jedem vollständig durchlaufenen Maschinenzyklus für jede Sektion geprüft, ob eine Veränderung des mindestens einen Plunger-Bewegungsprofils der Sektion erforderlich ist. Diese Prüfung kann insbesondere darin bestehen, dass ermittelt wird, ob die Massenbezugswert-Differenz oberhalb eines vorgegebenen Schwellenwerts liegt, und dass, wenn dies der Fall ist, das zugehörige Bewegungsprofil angepasst wird. Nach wenigen Maschinenzyklen stellt sich die gewünschte Sequenz von Tropfenmassen ein.

Es können mehrere Parameter des Plunger-Bewegungsprofils getrennt oder in Kombination miteinander eingestellt und verwaltet werden. Zu den Parametern zählen insbesondere die Stillstandsdauer des Plungers in seiner unteren und/oder oberen Endstellung, die Zeitdauer der Abwärts- und/oder Aufwärtsbewegung des Plungers, die Geschwindigkeitsstruktur der Abwärts- und/oder Aufwärtsbewegung des Plungers, der Plungerhub und die Lage des Plungerhubes relativ zu einem Tropfring und somit zu Tropfenauslässen des Speiserkopfes. Insbesondere können eine Veränderung der Stillstandsdauer des Plungers in seiner unteren Endstellung und eine Veränderung der unteren Endstellung miteinander kombiniert werden.

Zum Beispiel bewirkt eine Verlängerung der Stillstandsdauer des Plungers in seiner unteren Endstellung eine Verringerung der Tropfenmasse, weil der Plunger in dieser Endstellung den wirksamen Querschnitt des Tropfenauslasses teilweise verschließt. Bei gleichbleibendem Plungerhub wird durch eine Veränderung der Zeitdauer der Abwärts- und/oder Aufwärtsbewegung des Plungers, also der Plungergeschwindigkeit, die Frequenz der Tropfenabgabe aus dem Speiserkopf beeinflusst, wobei eine Erhöhung dieser Frequenz mit einer Verringerung der Tropfenmasse einhergeht. Mit der Lage des Plungerhubes wird die untere Endstellung des Plungers verändert, wodurch Einfluss auf den wirksamen Querschnitt des Tropfenauslasses genommen wird. Bei der Aufwärtsbewegung des Plungers aus seiner unteren Endstellung heraus tritt eine Saugwirkung auf das zähflüssige Glas ein. Dadurch wird ein gewisser Teil des schmelzflüssigen Glases wieder von dem Tropfenauslass weggezogen. Diese Saugwirkung ist insbesondere dann von Bedeutung, wenn bei einem Doppeltropfenbetrieb ein Einzelplunger vorgesehen ist, der mit zwei Tropfenauslässen zusammenwirkt. Durch den relativ großen Durchmesser des Einzelplungers ist eine hohe Saugwirkung auf das zähflüssige Glas gegeben. Auch spielt für die Menge des durch den Tropfenauslass abgegebenen Glases die Geschwindigkeit, mit der der Plunger nahe seiner unteren Endstellung abwärts bewegt wird, eine Rolle.

Es kann ein sich im Wesentlichen waagerecht erstreckender Plungerhalter vorgesehen sein, an dem alle in dem Speiserkopf vorgesehenen Plunger gemeinsam befestigt sind. Alternativ kann auch vorgesehen sein, dass jeder Plunger für sich an einem solchen sich im Wesentlichen waagerecht erstreckende Plungerhalter befestigt ist und jeder Plungerhalter einen eigenen Antrieb aufweist. Zur praktischen Realisierung jedes vorgesehenen Plunger-Bewegungsprofils kann insbesondere vorgesehen sein, dass jedes Plunger-Bewegungsprofil durch einen Datensatz für ein zugehöriges Bewegungsprofil des Plungerhalters bestimmt ist. Wenn mehrere Plunger vorgesehen und diese an demselben Plungerhalter befestigt sind, wird durch einen einzelnen Datensatz für ein Bewegungsprofil des Plungerhalters gleichzeitig jeweils ein Bewegungsprofil jedes Plungers bestimmt. Hierbei kann es sich um eine vollständige Bestimmung handeln oder auch um eine teilweise Bestimmung, nämlich dann, wenn die Plunger relativ zueinander in ihrer axialen Position einstellbar sind. Letzteres wird in der Regel der Fall sein, wobei einer der Plunger in seiner axialen Position unveränderbar sein kann, während die restlichen Plunger relativ zu dem festen Plunger einstellbar sind. In diesem Fall ist vorzugsweise vorgesehen, zusätzlich zu dem jeweiligen Datensatz für den Plungerhalter für jeden verstellbaren Plunger einen Datensatz für ein Profil zum Bewegen des Plungers relativ zu seinem Plungerhalter vorzusehen. Das gewünschte Bewegungsprofil jedes Plungers ergibt sich dann aus der Überlagerung der Bewegung des Plungerhalters und einer möglichen Verstellbewegung des Plungers relativ zu seinem Plungerhalter. Diese Überlagerung wird praktisch ausgeführt durch die Abarbeitung beider Datensätze.

Zusätzlich zu der beschriebenen Regelung der Plungerbewegung kann auch eine Regelung der axialen Position des Drosselrohrs des Speiserkopfes vorgesehen sein, um z.B. die Auswirkungen von Viskositätsänderungen des schmelzflüssigen Glases oder von Änderungen des Glasstandes im Speiserkopf auf das Gewicht der herzustellenden Glasbehälter zu kompensieren. Für diesen Fall kann vorgesehen sein, dass ein über einen gesamten Maschinenzyklus bestehender gleichförmiger Differenzanteil zwischen den Massenbezugs-Istwerten und den Massenbezugs-Sollwerten bei der Regelung der Plunger-Bewegungsprofile unberücksichtigt bleibt. Dem liegt die Tatsache zugrunde, dass eine Tropfenmassenabweichung, die auf eine Viskositäts- oder Glasstandsänderung zurückgeht, sich relativ langsam entwickelt und somit im Wesentlichen über einen Maschinenzyklus als konstant angesehen werden kann. Somit wird eine Massenbezugswert-Differenz, soweit sie gleichförmig über einen gesamten Maschinenzyklus besteht, durch die vertikale Einstellung des Drosselrohrs beseitigt, während im Rahmen der Veränderung der Plunger-Bewegungsprofile Schwankungen geregelt werden, die sich in bezug auf eine einzelne Vorformstation ergeben.

Um zu erkennen, ob die Gesamtmasse aller Tropfen eines Maschinenzyklus zu hoch oder zu niedrig ist, wird ein realer Mittelwert der Massenbezugswert-Differenzen aller Tropfen eines Maschinenzyklus gebildet. Wenn dieser reale Mittelwert, der auch einen negativen Wert annehmen kann, von null verschieden ist, wird die axiale Position des Drosselrohrs entsprechend verstellt, so dass der reale Mittelwert der Massenbezugswert-Differenzen zumindest nahezu den Wert null annimmt. Um darüber hinaus jeweils die Massenbezugswert-Differenzen der einzelnen Tropfen, die nacheinander einer selben Vorformstation zugeführt werden, zu minimieren, werden ein oder mehrere Parameter des Bewegungsprofils desjenigen Plungers verändert, der die Tropfen erzeugt hat. Die Veränderung der Plunger-Bewegungsprofile erfolgt hingegen auf der Basis von skalierten Massenbezugswert-Differenzen. Diese sind mit der Maßgabe erzeugt worden, dass sie einen "fiktiven" Mittelwert von null haben.

Auf diese Weise wird erreicht, dass der Drosselrohr-Regelkreis und der Plunger-Regelkreis sich gegenseitig möglichst wenig beeinflussen.

Es kann verfahrenstechnisch sinnvoll sein, insbesondere bei innerhalb des Sortiments stark unterschiedlichen Vorform-Profilen oder Pressstempeldurchmessern für leichte Hohlglasbehälter innerhalb des Sortiments wesentlich andere Plunger-Bewegungsprofile zu verwenden als für schwere Hohlglasbehälter, um dadurch jeweils eine unterschiedliche Tropfenkontur zu erzielen.

Die Bestimmung des Massenbezugs-Istwerts bzw. direkt der Masse kann bei einem Press-Blas-Verfahren durch die Erfassung der Stellung eines Pressstempels in einer Vorformstation am Ende des Presshubes erfolgen. Denn diese Stellung korreliert direkt mit der Masse des in die Vorformstation gelangten Tropfens. Ein geeigneter Wegaufnehmer für den Nachweis der axialen Position des Pressstempels kann insbesondere auf der Basis einer Induktivitätsänderung arbeiten, wobei der Pressstempel an einer Kolbenstange einer Kolben-Zylinder-Einheit montiert ist und eine relativ zu dem Zylinder feste, ringförmige Spule mit einem an dem Kolben montierten, metallischen Betätigungselement zur Änderung der Induktivität der Spule in Abhängigkeit von der axialen Relativstellung des Kolbens und des Zylinders zusammenwirkt. Vorzugsweise handelt es sich bei dem Wegaufnehmer um einen Wegaufnehmer gemäß der EP 0 652 854 B1.

Beim Blas-Blas-Verfahren kann die Massenbestimmung der geschnittenen Tropfen auf der Basis einer Kapazitätsänderung erfolgen, welche der jeweilige Tropfen hervorruft, wenn er zwischen zwei Kondensatorplatten hindurchfällt. Es kann insbesondere das Verfahren bzw. die Vorrichtung gemäß DE 101 33 019 C1 verwendet werden. Die jeweils gemessenen Tropfenmassen bzw. -gewichte werden in Zündfolge geordnet gespeichert und mit einem für jede Vorfomstation separat einstellbaren Massenbezugs- bzw. Gewichts-Sollwert verglichen.

Die Aufgabe bezüglich der Vorrichtung wird durch die Merkmale des Anspruchs 11 gelöst. Die Vorrichtung weist mindestens einen Plunger mit Mitteln zum Aufund Abbewegen auf. Ferner enthält die Vorrichtung eine Steuerungseinheit, in der für jede Sektion einer I.S.-Glasformmaschine ein veränderbares Bewegungsprofil pro Plunger abgespeichert werden kann. Es können also im Gegensatz zu den Vorrichtungen gemäß der EP 0 612 698 B1 und der US 6 272 885 B1 für jeden Plunger mehrere veränderbare Bewegungsprofile in der Steuerungseinheit gleichzeitig abgespeichert werden, z.B. bei acht Sektionen acht Bewegungsprofile. Diese Bewegungsprofile werden nacheinander in einer bestimmten Reihenfolge ausgeführt. Ferner sind Mittel vorgesehen, eine Massenbezugswert-Differenz, wie sie oben beschrieben ist, von einem oder mehreren aufeinander folgenden Tropfen für jede Vorformstation jeder Sektion zu bestimmen. Die Steuerungseinheit, die über eine Datenleitung mit den Mitteln zur Bestimmung der Massenbezugswert-Differenz verbunden ist, ist so ausgelegt, dass sie in Abhängigkeit der ermittelten Massenbezugswert-Differenz für jede Sektion das Plunger-Bewegungsprofil bzw. bei mehreren Vorformstationen die Plunger-Bewegungsprofile so verändern kann, dass durch Wiederholung der Bestimmung der Massenbezugswert-Differenz mit anschließender Veränderung des Bewegungsprofils für weitere Feederzyklen eine schrittweise Annäherung des jeweiligen Massenbezugs-Istwerts an den Massenbezugs-Sollwert erfolgt.

Bevorzugte Ausgestaltungen der Vorrichtung sind in den Ansprüche 12 bis 17 angegeben.

Die Vorteile, die oben im Zusammenhang mit dem erfindungsgemäßen Verfahren beschrieben sind, treffen entsprechend auf die erfindungsgemäße Vorrichtung zu.

Im Folgenden wird die Erfindung anhand von Ausführungsbeispielen näher erläutert, wobei auf die Figuren Bezug genommen wird. Es zeigen:
Fig. 1 schematisch eine Vorrichtung zur Regelung der Glastropfenmasse bei der Herstellung von Hohlglasbehältern mittels einer I.S.-Glasformmaschine,
Fig. 2 die Vorrichtung gemäß Fig.1 in einer anderen Arbeitsposition,
Fig. 3 einen Längsschnitt durch einen Pressstempelmechanismus mit geschlossener Vorform und zugehörigem Blockschaltbild zur Bestimmung einer Massendifferenz,
Fig. 4 zwei unterschiedliche Bewegungsprofile für einen Plungerhalter,
Fig. 5 zwei weitere unterschiedliche Bewegungsprofile für einen Plungerhalter,
Fig. 6 die Lage von zwei Plungerhüben über mehrere Feederzyklen.

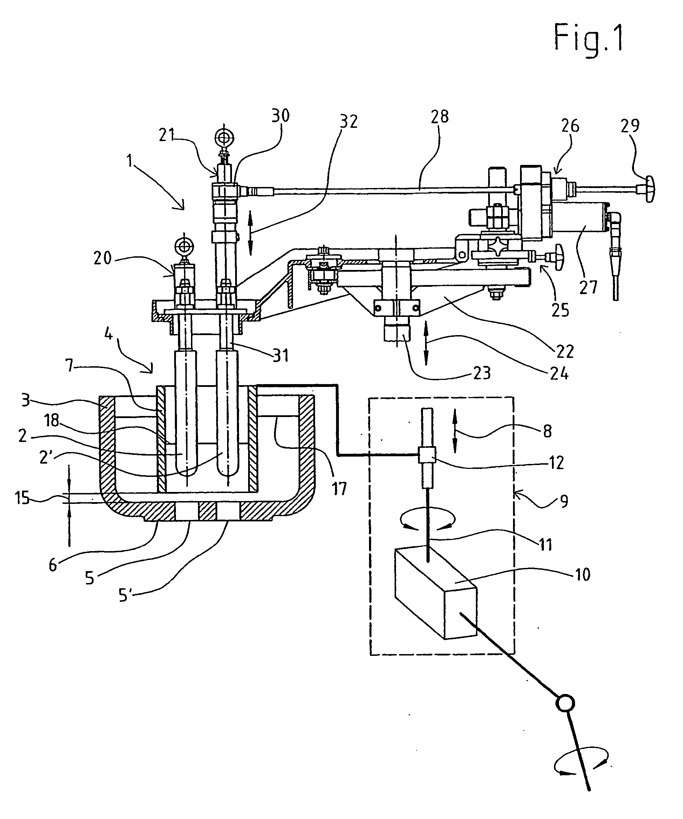

Die Vorrichtung zur Regelung der Glastropfenmasse gemäß Fig. 1 ist mit 1 bezeichnet. Die Vorrichtung 1 weist zwei Plunger 2 und 2' auf. Die Plunger 2, 2' sind in einem Speiserkopf 3 eines Speisers 4 angeordnet. Der Speiserkopf 3 besitzt einen zweifachen Tropfenauslass, der durch zwei Durchbrechungen 5 und 5' in einem Tropfring 6 gebildet ist. Ferner weist der Speiserkopf 3 ein Drosselrohr 7 auf, das die beiden Plunger 2, 2' umgibt. Das Drosselrohr 7 ist in an sich bekannter Weise in seiner als Stellgröße dienenden axialen Position gemäß Doppelpfeil 8 veränderbar. Ein Antrieb 9 des Drosselrohrs 7 ist in Fig. 1 schematisiert und nur teilweise gezeigt. Zur Verstellung der vertikalen Position des Drosselrohrs 7 ist ein nicht gezeigter Motor vorgesehen, der über ein Winkelgetriebe 10 eine Spindel 11 antreibt. Die Spindel 11 wirkt mit einer mit dem Drosselrohr 7 verbundenen Spindelmutter 12 zusammen. Weiterhin kann ein Mechanismus (nicht gezeigt) vorgesehen sein, um das Drosselrohr 7 zur symmetrischen Anordnung um den zweifachen Tropfenauslass 5, 5' herum waagerecht verstellen zu können. Durch die vertikale Verstellung gemäß Doppelpfeil 8 wird ein Spalt 15 zwischen einem unteren Ende des Drosselrohrs 7 und dem Tropfring 6 eingestellt.

In dem Speiserkopf 3 befindet sich schmelzflüssiges Glas. Der Glasstand außerhalb des Drosselrohrs 7 ist mit 17 bezeichnet, während der Glasstand innerhalb des Drosselrohrs mit 18 bezeichnet ist. Der Glasstand 18 hängt vom Glasstand 17 und von der Größe des Spalts 15 ab. Der Glasstand 18 bestimmt letztendlich das aus den Durchbrechungen 5, 5' pro Zeiteinheit bzw. pro Feederzyklus austretende Glasvolumen. Durch eine vertikale Verstellung des Drosselrohrs 7 gemäß Doppelpfeil 8 kann somit insbesondere eine Änderung des Glasstands 17 oder eine Viskositätsänderung des schmelzflüssigen Glases über einen Zeitraum ausgeglichen werden, der gegenüber der Dauer eines Feederzyklus relativ lang ist.

Die Plunger 2, 2' sind jeweils mit Befestigungsmitteln 20 bzw. 21 an einem Plungerhalter 22 befestigt. Der Plungerhalter 22 ist an einer Tragsäule 23 befestigt, die senkrecht auf und ab bewegbar ist, wie durch Doppelpfeil 24 angedeutet ist. Bei dem Antriebsmechanismus für die Tragsäule 23, der nicht gezeigt ist, kann es sich beispielsweise um den Antriebsmechanismus gemäß der DE 203 16 501 U1 handeln. Der Plungerhalter 22 weist Mittel 25 zur horizontalen Grundjustierung auf.

Während die Höhe des Plungers 2 relativ zu dem Plungerhalter 22 fest ist, kann die Höhe des Plungers 2' relativ zu dem Plungerhalter 22 durch eine Höhenverstelleinrichtung 26 verändert werden. Die Höhenverstelleinrichtung 26 weist eine Motor-Getriebe-Einheit 27 auf, welche eine Welle 28 antreibt. Ein Handrad 29 erlaubt ein manuelles Drehen der Welle 28. Die Welle 28 wirkt über ein Schneckengetriebe 30 auf ein Führungselement 31 der Befestigungsmittel 21, um den Plunger 2' gemäß Doppelpfeil 32 zu bewegen.

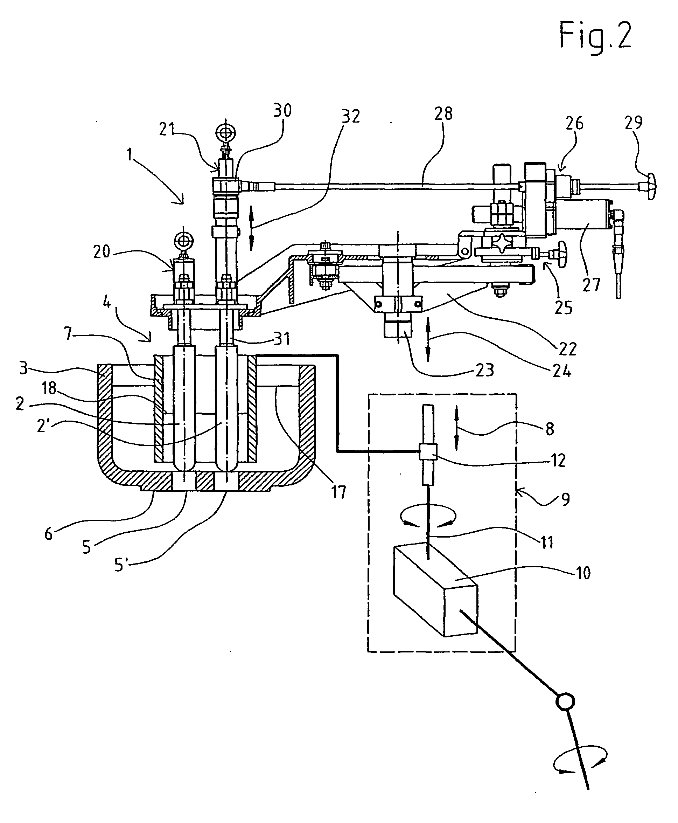

In Fig. 2 sind beide Plunger 2,2' in einer unteren Endstellung gezeigt. Hierbei handelt es sich um eine untere Endstellung, die zu einem bestimmten Bewegungsprofil einer Reihe von verschiedenen Bewegungsprofilen der Plunger 2, 2' gehört.

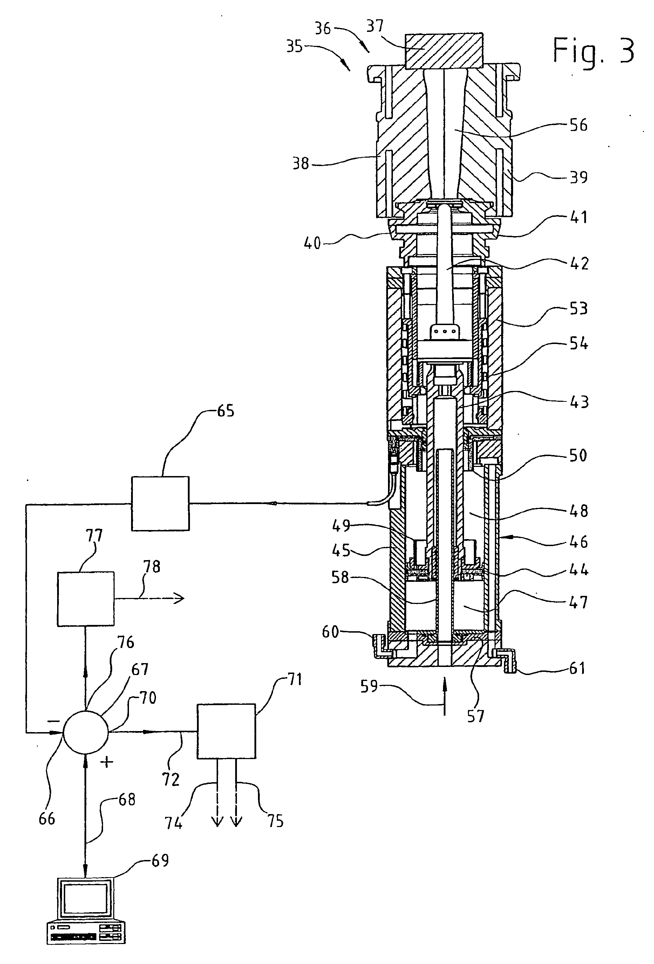

Fig. 3 zeigt eine Vorformstation 35 einer Sektion 36 einer I.S.-Glasformmaschine. Die Vorformstation 35 weist einen Vorformboden 37, Vorformhälften 38 und 39, Mündungswerkzeughälften 40 und 41 und einen Pressstempel 42 auf. Der Pressstempel 42 ist in an sich bekannter Weise am oberen Ende einer Kolbenstange 43 eines Kolbens 44 befestigt. Der Kolben 44 ist in einem Zylinder 45 einer Kolben-Zylinder-Einheit 46 verschiebbar. Unterhalb des Kolbens 44 befindet sich ein Vorschubraum 47 und oberhalb des Kolbens 44 ein Rückzugsraum 48. Der Kolben 44 trägt einen Betätigungsring 49 für einen Pressstempelstellungssensor 50, der in diesem Fall gemäß der EP 0 652 854 B1 ausgebildet ist.

Der Pressstempel 42 wird durch einen zu dem Zylinder 45 koaxialen Führungszylinder 53 geführt. In dem Führungszylinder 53 ist außerdem eine Feder 54 angeordnet, die bei entlüftetem Vorschubraum 47 und entlüftetem Rückzugsraum 48 den Pressstempel 42 in seine in Fig. 3 gezeigte axiale Ladestellung bewegt. In dieser Ladestellung taucht eine obere Spitze des Pressstempels 42 gerade in einen Mündungsbereich einer Vorformausnehmung 56 ein. In der Ladestellung ist zunächst der Vorformboden 37 entfernt, so dass von oben her ein Glastropfen in die Vorformausnehmung 56 und auf die Spitze des Pressstempels 42 fallen kann.

Die Kolbenstange 43 ist hohl ausgebildet und nimmt ein an einem Boden 57 befestigtes Kühlluftrohr 58 auf. Dem Kühlluftrohr 58 wird Kühlluft für den Pressstempel 42 in Richtung eines Pfeils 59 zugeführt.

Ein Anschluss zur Be- und Entlüftung des Vorschubraums 47 ist mit 60, ein Anschluss zur Be- und Entlüftung des Rückzugsraums 48 mit 61 bezeichnet. Weitere Mittel zur Be- und Entlüftung des Vorschubraums 47 und des Rückzugsraums 48 zur Ausführung eines Presszyklus des Pressstempels 42 sind nicht dargestellt. Insbesondere kann es sich dabei um Mittel gemäß der deutschen Patentanmeldung 103 16 600.9 handeln.

Der Pressstempelstellungssensor 50 ist über eine SignalverstärkeriSignalauswerteeinheit 65 mit einem Signaleingang 66 einer in Software realisierten Regelschaltung 67 verbunden. Die Regelschaltung 67 ist ferner über eine Leitung 68 bidirektional mit einer Eingabe-/Ausgabeeinheit 69 verbunden. Ein Signalausgang 70 der Regelschaltung 67 ist durch eine Leitung 72 mit einer gemeinsamen Antriebssteuerung 71 für den Plungerhalter 22 und die Höhenverstelleinrichtung 26 verbunden.

Mittels des Pressstempelsensors 50 wird ein Stellungssignal erzeugt, das eine Aussage über die Größe der maximalen Eindringtiefe des Pressstempels 42 in das Formwerkzeug liefert. Je größer die maximale Eindringtiefe ist, desto geringer ist die in die Vorformausnehmung 56 gelangte Tropfenmasse. Die gemessene Pressstempelendstellung wird von der Signalverstärker -/ Signalauswerteeinheit 65 an die Regelschaltung 67 gegeben. Die Regelschaltung 67 vergleicht die gemessene Pressstempelendstellung mit einem Sollwert für die Pressstempelendstellung, welcher der Regelschaltung 67 über die Eingabe-/Ausgabeeinheit 69 eingegeben worden ist. Die Sollwerte der Pressstempelendstellung sind für jede Vorformstation 35 der I.S.-Glasformmaschine getrennt einstellbar.

Die daraus erhaltene Abweichung zwischen dem Sollwert und dem Istwert der Pressstempelendstellung wird unter Berücksichtigung der bekannten Querschnittsfläche des Pressstempels 42 in eine Massendifferenz bzw. in eine Gewichtsdifferenz umgerechnet. Diese Massendifferenz wird über den Signalausgang 70 an die Antriebssteuerung 71 gegeben. In der Antriebssteuerung 71 wird ein realer Mittelwert der Massendifferenzen aller Tropfen eines Maschinenzyklus gebildet. Durch eine schrittweise Veränderung der axialen Position des Drosselrohrs 7, vorzugsweise jeweils zwischen zwei Maschinenzyklen, wird dafür gesorgt, dass dieser reale Mittelwert zumindest nahezu den Wert null annimmt. Wenn dies erreicht ist, weisen die Tropfen eines Maschinenzyklus in der Summe betrachtet die gewünschte Gesamtmasse auf, jedoch werden die einzelnen Tropfen noch nicht den Massen-Sollwert aufweisen. Um dies zu erreichen, werden die ermittelten Massendifferenzen der Einzeltropfen nach einer Skalierung verwendet, um einen oder mehrere Parameter des Bewegungsprofils desjenigen Plungers zu verändern, der den Tropfen erzeugt hat. Die Skalierung erfolgt dergestalt, dass die skalierten Massendifferenzen bei vorzeichenrichtiger Addition über einen Maschinenzyklus einen "fiktiven" Mittelwert von null ergeben. Auf diese Weise sind der Drosselrohr-Regelkreis und der Plunger-Regelkreis quasi in Reihe geschaltet.

Die Antriebssteuerung 71 ist über eine Signalleitung 74 mit einem nicht gezeigten Motor des Antriebsmechanismus für die Tragsäule 23 verbunden. Ferner ist die Antriebssteuerung 71 über eine Signalleitung 75 mit der Schrittmotor-Getriebe-Einheit 27 der auf den Plunger 2' wirkenden Höhenverstelleinrichtung 26 verbunden.

Ein weiterer Signalausgang 76 der Regelschaltung 67 ist mit einer Drosselrohr-Antriebssteuerung 77 verbunden. Eine Signalleitung 78 führt von der Drosselrohr-Antriebssteuerung 77 zu dem Antrieb 9 des Drosselrohrs 7.

Es müssen so viele Plunger-Bewegungsprofile vorgesehen werden, wie es Vorformstationen 35 in der I.S. Glasformmaschine gibt. Da die Vorrichtung 1 gemäß Fig. 1 bzw. 2 einen Speiserkopf 3 mit einem zweifachen Tropfenauslass aufweist, ist vorgesehen, dass in jede Sektion der I.S.-Glasformmaschine gleichzeitig zwei Tropfen gelangen, die jeweils in einer von zwei Vorformstationen 35 der jeweiligen Sektion verarbeitet werden. Zum Beispiel kann es sich bei der 1.S.-Glasformmaschine um eine 8-DG-Maschine handeln, welche also acht Sektionen aufweist und innerhalb eines Maschinenzyklus sechzehn Tropfen verarbeitet. Weiterhin kann vorgesehen sein, dass die beiden Tropfen, die gleichzeitig in eine Sektion gelangen, dieselbe Masse aufweisen sollen. Ein relativ einfaches herzustellendes Sortiment kann zwei unterschiedliche Typen von Hohlglasbehältem aufweisen, nämlich einen leichten Hohlglasbehälter und einen schweren Hohlglasbehälter. In diesem Fall kann vorgesehen sein, dass über die Zündfolge eines Maschinenzyklus jeweils auf einen schweren Tropfen ein leichter folgt, auf diesen wieder ein schwerer u.s.w.

Bei der obigen Ausführungsform des Verfahrens bzw. der Vorrichtung sind in der Antriebssteuerung 71 acht Datensätze für acht Bewegungsprofile des Plungerhalters 22, also für die acht Feederzyklen eines Maschinenzyklus, abgespeichert. Da alternierend jedoch nur zwei unterschiedliche Tropfenmassen erzeugt werden sollen, werden nach Abschluss eines Einregelungsvorgangs, der sich in der Regel nur über wenige Maschinenzyklen erstreckt, jeweils vier Bewegungsprofile bzw. Datensätze identisch sein, so dass der Plungerhalter 22 alternierend immer nur zwei Bewegungsabläufe ausführt.

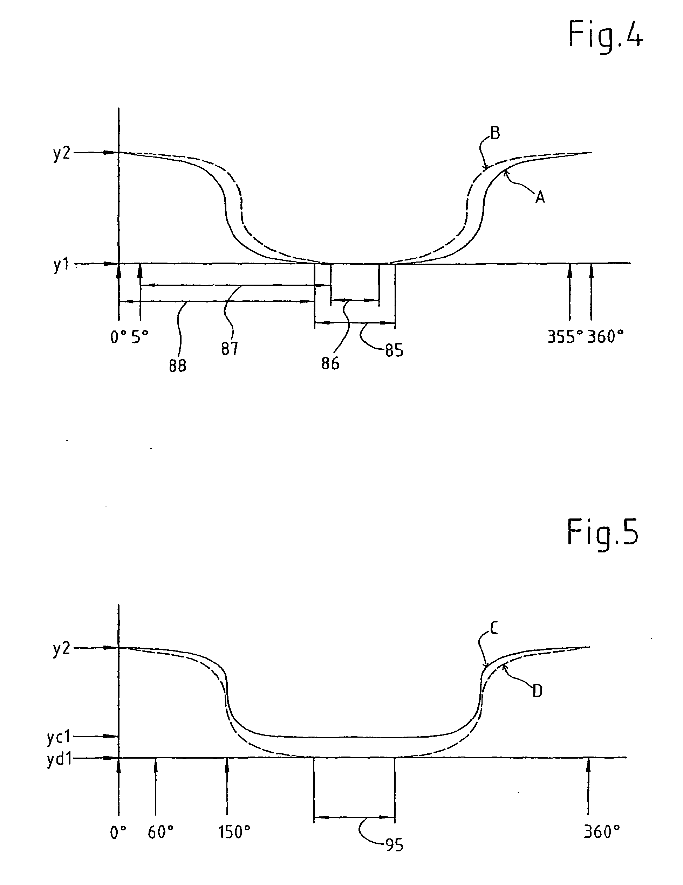

In Fig. 4 sind diese beiden Plungerhalter-Bewegungsprofile mit A und B bezeichnet. Auf der Abszisse ist der Ablauf eines Feederzyklus aufgetragen, wobei der Beginn und das Ende eines Feederzyklus mit 0° bzw. 360° bezeichnet sind. Auf der Ordinate ist die vertikale Position des Plungerhalters 22 aufgetragen, wobei mit y1 eine untere Endstellung des Plungerhalters 22 und mit y2 eine obere Endstellung des Plungerhalters 22 bezeichnet sind. Da die Zeitdauer eines Feederzyklus vorgegeben ist, stellen die Bewegungsprofile A und B Ort und Zeit des Plungerhalters 22 über einen Feederzyklus dar.

Das Bewegungsprofil A weist in der unteren Endstellung y1 des Plungerhalters 22 eine Stillstandsdauer 85 auf, die länger ist als eine entsprechende Stillstandsdauer 86 des Bewegungsprofils B. Da eine längere Stillstandsdauer eines Plungers in seiner unteren Endstellung eine geringere Tropfenmasse bewirkt, ist das Bewegungsprofil A für die Sektionen der 1.S.-Glasformmaschine vorgesehen, die zur Herstellung der leichteren Hohlglasbehälter verwendet werden, während das Bewegungsprofil B zur Erzeugung der Tropfen für die schwereren Hohlglasbehälter vorgesehen ist. Ferner weist das Bewegungsprofil A im Vergleich zu dem Bewegungsprofil B eine kürzere Stillstandsdauer in der oberen Endstellung y2 auf. Gemäß Bewegungsprofil B bleibt der Plungerhalter 22 etwa zwischen 355° und 5° in seiner oberen Endstellung y2. Die Zeitdauer 87 der Abwärtsbewegung gemäß Bewegungsprofil B ist jedoch nahezu gleich der Zeitdauer 88 der Abwärtsbewegung gemäß Bewegungsprofil A. Entsprechendes gilt für die Aufwärtsbewegungen gemäß den Bewegungsprofilen A und B, da die Abwärts- und Aufwärtsbewegungen des Bewegungsprofils A bzw. B jeweils symmetrisch zueinander sind. Bei dem Bewegungsprofil A ist die Stillständsdauer 85 in der unteren Endstellung y1 länger als die nahezu den Wert null aufweisende Stillstandsdauer in der oberen Endstellung y2.

Die beiden Bewegungsprofile A und B werden durch schrittweise Näherung ausgehend von jeweils einer Anfangsbewegung für das Bewegungsprofil A bzw. Bewegungsprofil B erreicht, indem nach Durchlaufen eines Maschinenzyklus die Bestimmung der Massendifferenz für jeden innerhalb des Maschinenzyklus erzeugten Tropfen durchgeführt wird und eine entsprechende Veränderung des zugehörigen Bewegungsprofils des Plungerhalters 22 vorgenommen wird. Dieses Näherungsverfahren ist abgeschlossen, wenn die Massen-Istwerte ausreichend nahe an dem jeweiligen Massen-Sollwert liegen, also die gemessene Massendifferenz einen vorgegebenen Schwellenwert nicht überschreitet. Das Näherungsverfahren benötigt in der Regel nur einige Maschinenzyklen.

In Fig. 5 sind zwei weitere Bewegungsprofile C und D des Plungerhalters 22 dargestellt, die ebenfalls für ein Sortiment, wie es in Zusammenhang mit Fig. 4 beschrieben ist, verwendet werden sollen. Die Bewegungsprofile C und D unterscheiden sich von den Bewegungsprofilen A und B vor allem dadurch, dass sie unterschiedliche Hübe des Plungerhalters 22 beschreiben. Der Hub des Bewegungsprofils C ist der Abstand zwischen einer unteren Endstellung yc1 und einer oberen Endstellung y2 des Plungerhalters 22. Während die obere Endstellung des Plungerhalters 22 gemäß dem Bewegungsprofil D ebenfalls y2 ist, liegt eine untere Endstellung yd1 tiefer als bei dem Bewegungsprofil C. Das Bewegungsprofil C bewirkt die Ausgabe der schwereren Tropfen aus dem Speiserkopf 3, das Bewegungsprofil D hingegen die Ausgabe der leichteren Tropfen. Denn durch die jeweilige untere Endstellung yc1 bzw. yd1 wird der freie Querschnitt der Durchbrechungen 5, 5' beeinflusst.

Eine Stillstandsdauer 95 des Plungerhalters 22 in seiner unteren Endstellung yc1 bzw. yd1 ist bei den beiden Bewegungsprofilen C und D gleich. Ferner unterscheidet sich das Bewegungsprofil C durch die Geschwindigkeitsstruktur der Abwärts- und Aufwärtsbewegung von dem Bewegungsprofil D. Beispielsweise zeigt sich diese unterschiedliche Geschwindigkeitsstrukur zwischen 60° und 150° sowie entsprechend in den dazu symmetrischen Aufwärtsbewegungen der Bewegungsprofile C und D.

Die beschriebenen Parameter oder auch weitere Parameter der Plungerhalter-Bewegungsprofile können zur Erzeugung einer gewünschten Tropfengröße bzw. Tropfenkontur verändert werden. Insbesondere kann die Geschwindigkeit, mit der der Plungerträger 22 nahe seiner unteren Endstellung abwärts- oder aufwärts bewegt wird, variiert werden. Bei der Aufwärtsbewegung wird bei sehr zähflüssigem Glas ein gewisser Teil des Glases wieder mit zurückgezogen.

Während in den oben beschriebenen Situationen gemäß Fig. 4 und Fig. 5 ein Sortiment mit nur zwei unterschiedlichen Artikelgewichten mit alternierender Reihenfolge in der Zündfolge hergestellt werden soll, kann z.B. auch vorgesehen sein, dass in dem Sortiment zwar nur zwei unterschiedliche Artikelgewichte vorgesehen sind, jedoch in einer Folge von acht Feederzyklen einer 8-DG-Maschine zunächst zwei schwere Tropfenpaare (z.B. 168 g pro Tropfen), danach fünf leichte Tropfenpaare (z.B. 160 g pro Tropfen) und anschließend wieder ein schweres Tropfenpaar erzeugt werden sollen. Die Sequenz der fünf leichten Tropfenpaare in Folge bewirkt, dass der Glasstand 18 im Inneren des Drosselrohrs 7 während der Dauer dieser Sequenz zunehmend steigt, da weniger Glas abfließt. Ohne eine entsprechende Regelung hätten die Tropfenpaare innerhalb dieser Leicht-Sequenz unterschiedliche Massen. Entsprechendes würde für eine Schwer-Sequenz gelten. Mit dem Verfahren bzw. der Vorrichtung gemäß der Erfindung kann in kurzer Zeit eine Regelung der gewünschten Massen der Tropfen erzeugt werden, indem für jeden erzeugten Tropfen ein zugehöriges Plunger-Bewegungsprofil eingestellt wird.

Es kann sein, dass die Bewegungsprofile der Plunger 2, 2' relativ betrachtet mit dem Bewegungsprofil des Plungerhalters 22 übereinstimmen. Dies ist dann der Fall, wenn eine geregelte Einstellung des Plungers 2' relativ zu dem Plunger 2 nicht vorgesehen ist. Eine solche Einstellung des Plungers 2' kann jedoch aufgrund unerwünschter geringfügiger Unterschiede zwischen den Durchbrechungen 5, 5' erforderlich sein, um zu erreichen, dass die beiden aus den Durchbrechungen 5, 5' ausgegebenen und in dieselbe Sektion gelangenden Tropfen gleich groß sind. In der Regel wird dies gewünscht sein. Wenn es dazu erforderlich ist, wird der Plunger 2' durch die Höhenverstelleinrichtung 26, die über die Antriebssteuerung 71 angesteuert wird, von Feederzyklus zu Feederzyklus verstellt. Diese Bewegung der Befestigungsmittel 21 bzw. zusätzliche Bewegung des Plungers 2' wird der Bewegung des Plungerhalters 22 überlagert, so dass sich daraus die resultierende Bewegung des Plungers 2' ergibt. In dem oben beschriebenen Beispiel einer 8-DG-Maschine werden dazu neben den acht Bewegungsprofil-Datensätzen für den Plungerhalter 22 weitere acht Bewegungsprofil-Datensätze für die Höhenverstelleinrichtung 26 in der Antriebssteuerung 71 gespeichert.

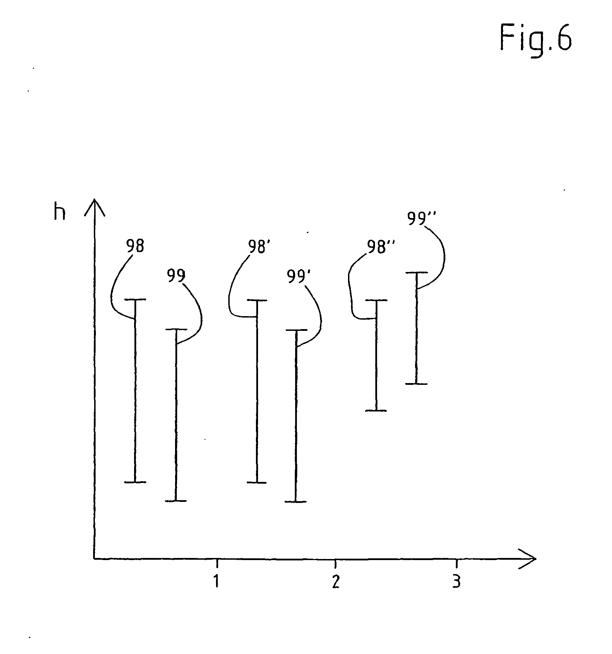

In Fig. 6 sind die Hübe der beiden Plunger 2 und 2' über drei aufeinander folgende Feederzyklen (Abszisse) dargestellt. Auf der Ordinate h ist die relative Höhe des jeweiligen unteren Endes des Plungers 2 bzw. 2' über dem Tropfring 6 dargestellt. Mit den Balken 98, 98' und 98" sind die Hübe des Plungers 2 und ihre Lage während drei aufeinander folgender Feederzyklen dargestellt. Ferner sind die Hübe des Plungers 2' und ihre Lage für die drei Feederzyklen durch Balken 99, 99' und 99" dargestellt. Die Plungerhübe 98 und 99 sind gleich, d.h. die maximalen Auslenkungen der Plunger 2 und 2' sind gleich, weil die Plunger 2, 2' an demselben Plungerhalter 22 befestigt sind. Jedoch ist die Lage der Plungerhübe 98 und 99 verschieden, um geringfügige Größenunterschiede der Durchbrechungen 5, 5' so auszugleichen, dass in dem Feederzyklus ein Paar gleich großer Tropfen erzeugt wird. Dazu ist der Plunger 2', anders als in den Fig. 1 und 2 dargestellt, etwas tiefer als der Plunger 2 an dem Plungerhalter 22 befestigt ist. Die Plungerhübe 98 und 99 sind somit ausschließlich durch die Hubbewegung des Plungerhalters 22 bestimmt.

Während des zweiten dargestellten Feederzyklus weisen die Plunger 2 und 2' die Hübe 98' und 99' auf. Diese sind gegenüber dem ersten gezeigten Feederzyklus unverändert, ebenso ihre Lage, da in dem in Fig. 6 gezeigten Beispiel das Näherungsverfahren bereits abgeschlossen ist, sich also ein gewünschtes Gleichgewicht in Bezug auf die Tropfenmassen eingestellt hat, und vorgesehen ist, während des ersten und des zweiten gezeigten Feederzyklus gleiche Tropfenmassen zu erzeugen.

Für den dritten gezeigten Feederzyklus ist hingegen vorgesehen, eine größere Tropfenmasse zu erzeugen. Dazu werden kleinere Plungerhübe 98" und 99" erzeugt, indem der Plungerhalter 22 gemäß einem zugehörigen Datensatz einen entsprechend verringerten Hub durchführt. Dabei befinden sich die unteren Endstellungen der Plunger 2 und 2' in einem größeren Abstand zu den Durchbrechungen 5 bzw. 5' als in den beiden vorherigen Feederzyklen. Die genannten geringfügigen Unterschiede der Durchbrechungen 5, 5' machen es nun in dem dritten gezeigten Feederzyklus erforderlich, den Plunger 2' in seiner vertikalen Position nach oben zu verschieben, um auch in dem dritten gezeigten Feederzyklus ein Paar gleich großer Tropfen zu erzeugen. Diese Verschiebung des Plungers 2' wird durch eine entsprechende Anpassung des Datensatzes mittels der Höhenverstelleinrichtung 26 bewirkt, und zwar vorzugsweise dann, wenn sich der Plunger 2' im Bereich seiner oberen Endstellung befindet. Die Dynamik der Veränderung der Hublage des Plungers 2' ist in Fig. 6 der Übersichtlichkeit halber nicht dargestellt.

## Patentansprüche

1. Verfahren zur Regelung der Glastropfenmasse bei der Herstellung von Hohlglasbehältern mittels einer Glasformmaschine (36), wobei mindestens ein Plunger (2,2') in einem Speiserkopf (3) eines Speisers (4) angeordnet und zum senkrechten Auf- und Abbewegen des mindestens einen Plungers (2,2') ein Bewegungsprofil (A,B,C,D) vorgesehen ist, welches veränderbar ist, um das Ausströmen schmelzflüssigen Glases aus dem Speiserkopf (3) zu beeinflussen,
**dadurch gekennzeichnet, dass** die Glasformmaschine eine I.S. (Individual Section)-Glasformmaschine (36) ist und zur simultanen Herstellung eines Sortiments von unterschiedlich schweren Hohlglasbehältern für jede Sektion (36) der I.S.-Glasformmaschine ein veränderbares Bewegungsprofil (A,B,C,D) pro Plunger (2,2') vorgesehen ist,
eine Massenbezugswert-Differenz aus einem Massenbezugs-Sollwert und einem gemessenen Massenbezugs-Istwert auf der Grundlage von zumindest einem von aufeinander folgenden Tropfen für jede Vorformstation (35) jeder Sektion (36) bestimmt wird,
in Abhängigkeit der bestimmten Massenbezugswert-Differenz für jede Vorformstation (35) das zugehörige Plunger-Bewegungsprofil (A,B,C,D) so verändert wird, dass durch anschließende Wiederholung der Bestimmung der Massenbezugswert-Differenz mit anschließender Veränderung des Bewegungsprofils (A,B,C,D) eine schrittweise Annäherung des Massenbezugs-Istwerts an den Massenbezugs-Sollwert erfolgt.

2. Verfahren nach Anspruch 1,
**dadurch gekennzeichnet, dass** nach jedem vollständig durchlaufenen Maschinenzyklus für jede Vorformstation (35) geprüft wird, ob die Massenbezugswert-Differenz oberhalb eines Schwellenwerts liegt, und, sofern dies der Fall ist, das Plunger-Bewegungsprofil (A,B,C,D) für die Vorformstation (35) angepasst wird.

3. Verfahren nach Anspruch 1 oder 2,
**dadurch gekennzeichnet, dass** die Stillstandsdauer (85,86) des Plungers (2,2') in seiner unteren (y1 ;yc1 ,yd1) und/oder oberen (y2) Endstellung verändert wird.

4. Verfahren nach einem der vorhergehenden Ansprüche,
**dadurch gekennzeichnet, dass** die Zeitdauer (87,88) der Abwärts- und/oder Aufwärtsbewegung des Plungers (2,2') verändert wird.

5. Verfahren nach einem der vorhergehenden Ansprüche,
**dadurch gekennzeichnet, dass** die Geschwindigkeitsstruktur der Abwärts- und/oder Aufwärtsbewegung des Plungers (2,2') verändert wird.

6. Verfahren nach einem der vorhergehenden Ansprüche,
**dadurch gekennzeichnet, dass** der Plungerhub (98,98',98",99,99',99") verändert wird.

7. Verfahren nach einem der vorhergehenden Ansprüche,
**dadurch gekennzeichnet, dass** die Lage (98,98',98",99,99',99") des Plungerhubes relativ zu einem Tropfring (6) des Speiserkopfes (3) verändert wird.

8. Verfahren nach einem der vorhergehenden Ansprüche,
**dadurch gekennzeichnet, dass** mindestens ein sich im Wesentlichen waagerecht erstreckender Plungerhalter (22) vorgesehen ist und jedes Plunger-Bewegungsprofil durch einen Datensatz für ein zugehöriges Bewegungsprofil (A,B,C,D) des Plungerhalters (22) bestimmt ist.

9. Verfahren nach Anspruch 8,
**dadurch gekennzeichnet, dass** bei Vorhandensein mehrerer Plunger (2,2') pro Sektion (36) zusätzlich zu dem jeweiligen Datensatz für den Plungerhalter (22) bzw. den Datensätzen für die Plungerhalter (22), außer für einen ersten Plunger (2), für jeden der Plunger (2') ein Datensatz für ein Profil (99,99',99") zum Bewegen des Plungers (2') relativ zu seinem Plungerhalter (22) vorgesehen ist.

10. Verfahren nach einem der vorhergehenden Ansprüche,
**dadurch gekennzeichnet, dass** dann, wenn zusätzlich die axiale Position eines Drosselrohrs (7) des Speiserkopfes (3) zur Kompensation der Auswirkungen von Änderungen der Viskosität des schmelzflüssigen Glases oder von Änderungen des Glasstandes (17,18) im Speiserkopf (3) auf die Masse der herzustellenden Glasbehälter geregelt wird, von den Massenbezugswert-Differenzen aller Tropfen eines Maschinenzyklus ein realer Mittelwert gebildet wird und dieser durch Veränderung der axialen Position des Drosselrohrs (7) zwischen jeweils zwei Maschinenzyklen dem Wert null angenähert wird und ferner die Massenbezugswert-Differenzen so skaliert werden, dass sich aus den skalierten Massenbezugswert-Differenzen ein fiktiver Mittelwert von null ergibt, und die Veränderung der Plunger-Bewegungsprofile (A,B,C,D) auf der Grundlage der skalierten Massenbezugswert-Differenzen erfolgt.

11. Vorrichtung (1) zur Regelung der Glastropfenmasse bei der Herstellung von Hohlglasbehältern mittels einer Glasformmaschine (36), aufweisend mindestens einen Plunger (2,2'), der in einem Speiserkopf (3) eines Speisers (4) angeordnet ist, und Mittel (22,23,26) zum Auf- und Abbewegen des mindestens einen Plungers (2,2'), wobei in einer Steuerungseinheit (71) der Vorrichtung (1) ein Bewegungsprofil (A,B,C,D) für die Plungerbewegung abgespeichert ist, welches veränderbar ist, um das Ausströmen schmelzflüssigen Glases aus dem Speiserkopf (3) zu beeinflussen,
**dadurch gekennzeichnet, dass** die Glasformmaschine eine I.S. (Individual Section)-Glasformmaschine (36) ist und zur simultanen Herstellung eines Sortiments von unterschiedlich schweren Hohlglasbehältern für jede Sektion (36) der I.S.-Glasformmaschine ein veränderbares Bewegungsprofil (A,B,C,D) pro Plunger (2,2') in der Steuerungseinheit (71) abspeicherbar ist,
die Vorrichtung (1) Mittel (67) aufweist, eine Massenbezugswert-Differenz aus einem Massenbezugs-Sollwert und einem gemessenen Massenbezugslstwert auf der Grundlage von zumindest einem von aufeinander folgenden Tropfen für jede Vorformstation (35) jeder Sektion (36) zu bestimmen,
und die Steuerungseinheit (71) über eine Datenleitung (72) mit den Mitteln (67) zur Bestimmung der Massenbezugswert-Differenz verbunden ist und ausgelegt ist, in Abhängigkeit der bestimmten Massenbezugswert-Differenz für jede Vorformstation (35) das zugehörige Plunger-Bewegungsprofil (A,B,C,D) so zu verändern, dass durch anschließende Wiederholung der Bestimmung der Massenbezugswert-Differenz mit anschließender Veränderung des Bewegungsprofils (A,B,C,D) eine schrittweise Annäherung des Massenbezugs-Istwerts an den Massenbezugs-Sollwert erfolgt.

12. Vorrichtung nach Anspruch 11,
**dadurch gekennzeichnet, dass** die Vorrichtung (1) ausgelegt ist, nach jedem vollständig durchlaufenden Maschinenzyklus für jede Vorfomstation (35) zu prüfen, ob die Massenbezugswert-Differenz oberhalb eines Schwellenwerts liegt, und, sofern dies der Fall ist, das Plunger-Bewegungsprofil (A,B,C,D) für die Vorformstation (35) anzupassen.

13. Vorrichtung nach Anspruch 11 oder 12,
**dadurch gekennzeichnet, dass** die Vorrichtung (1) ausgelegt ist, die Plunger-Bewegungsprofile (A,B,C,D) zu verändern, indem ein oder in Kombination miteinander mehrere Parameter aus der Gruppe Stillstandsdauer (85,86) des jeweiligen Plungers (2,2') in seiner unteren (y1;yc1,yd1) und/oder oberen (y2) Endstellung, Zeitdauer (87,88) der Abwärts- und/oder Aufwärtsbewegung des Plungers (2,2'), Geschwindigkeitsstruktur der Abwärts- und/oder Aufwärtsbewegung des Plungers (2,2'), Plungerhub (98,98',98",99,99',99") und Lage (98,98',98",99,99',99") des Plungerhubes relativ zu einem Tropfring (6) des Speiserkopfes (3) verändert werden.

14. Vorrichtung nach einem der Ansprüche 11 bis 13,
**dadurch gekennzeichnet, dass** die Vorrichtung (1) mindestens einen sich im Wesentlichen waagerecht erstreckenden Plungerhalter (22) aufweist und jedes Plunger-Bewegungsprofil durch einen in der Steuerungseinheit (71) abgespeicherten Datensatz für ein zugehöriges Bewegungsprofil (A,B,C,D) des Plungerhalters (22) bestimmt ist.

15. Vorrichtung nach Anspruch 14,
**dadurch gekennzeichnet, dass** alle Plunger (2,2') an einem Plungerhalter (22) gemeinsam befestigt sind und die Steuerungseinheit eine Antriebssteuerung (71) des Plungerhalters (22) ist.

16. Vorrichtung nach Anspruch 14 oder 15,
**dadurch gekennzeichnet, dass** die Vorrichtung (1) mehrere Plunger (2,2') aufweist und pro Sektion (36) zusätzlich zu dem jeweiligen Datensatz für den Plungerhalter (22) bzw. den Datensätzen für die Plungerhalter (22), außer für einen ersten Plunger (2), für jeden der Plunger (2') ein Datensatz für ein Profil (99,99',99") zum Bewegen des Plungers (2') relativ zu seinem Plungerhalter (22) mittels einer Höhenverstelleinrichtung (26) in einer zugehörigen Antriebssteuerung (71) abspeicherbar ist.

17. Vorrichtung nach einem der Ansprüche 11 bis 16,
**dadurch gekennzeichnet, dass** die Vorrichtung (1) ausgelegt ist, wenn zusätzlich ein "Regelkreis für die axiale Position eines Drosselrohrs (7) des Speiserkopfes (3) zur Kompensation der Auswirkungen von Änderungen der Viskosität des schmelzflüssigen Glases oder von Änderungen des Glasstandes im Speiserkopf (3) auf die Masse der herzustellenden Glasbehälter vorgesehen ist, von den Massenbezugswert-Differenzen aller Tropfen eines Maschinenzyklus einen realen Mittelwert zu bilden und diesen durch Veränderung der axialen Position des Drosselrohrs (7) zwischen jeweils zwei Maschinenzyklen dem Wert null anzunähern und ferner die Massenbezugswert-Differenz so zu skalieren, dass sich aus den skalierten Massenbezugswert-Differenzen ein fiktiver Mittelwert von null ergibt, und die Veränderung der Plunger-Bewegungsprofile (A,B,C,D) auf der Grundlage der skalierten Massenbezugswert-Differenzen durchzuführen.

## Claims

1. Method of controlling the glass gob mass in the production of hollow glass containers by means of a glass forming machine (36), wherein at least one plunger (2,2') is disposed in a feeder head (3) of a feeder (4) and in order to move the at least one plunger (2,2') vertically upwards and downwards a movement profile (A,B,C,D) is provided which can be changed in order to influence the discharge of molten glass from the feeder head (3),
**characterized in that** the glass forming machine is an IS (Individual Section) glass forming machine (36) and for the simultaneous production of an assortment of hollow glass containers of a different weight a changeable movement profile (A,B,C,D) for each plunger (2,2') is provided for each section (36) of the IS glass forming machine,
a mass reference value difference is determined from a mass reference desired value and a measured mass reference actual value on the basis of at least one of consecutive gobs for each preform station (35) of each section (36),
in dependence upon the determined mass reference value difference for each preform station (35) the associated plunger movement profile (A,B,C,D) is changed in such a manner that by virtue of subsequent repetition of the determination of the mass reference value difference with subsequent change to the movement profile (A,B,C,D) the mass reference actual value is approximated stepwise to the mass reference desired value.

2. Method as claimed in claim 1,
**characterized in that** after each completed machine cycle a check is carried out for each preform station (35) to verify whether the mass reference value difference is above a threshold value and if this is the case the plunger movement profile (A,B,C,D) is adapted for the preform station (35).

3. Method as claimed in claim 1 or 2,
**characterized in that** the standstill period (85,86) of the plunger (2,2') is changed in its lower (y1;yc1,yd1) and/or upper (y2) end position.

4. Method as claimed in any one of the preceding claims,
**characterized in that** the duration (87,88) of the downwards and/or upwards movement of the plunger (2,2') is changed.

5. Method as claimed in any one of the preceding claims,
**characterized in that** the speed structure of the downwards and/or upwards movement of the plunger (2,2') is changed.

6. Method as claimed in any one of the preceding claims,
**characterized in that** the plunger stroke (98,98',98",99,99',99") is changed.

7. Method as claimed in any one of the preceding claims,
**characterized in that** the position (98,98',98",99,99',99") of the plunger stroke relative to an orifice ring (6) of the feeder head (3) is changed.

8. Method as claimed in any one of the preceding claims,
**characterized in that** at least one substantially horizontally extending plunger holder (22) is provided and each plunger movement profile is determined by a data record for an associated movement profile (A,B,C,D) of the plunger holder (22).

9. Method as claimed in claim 8,
**characterized in that** in the presence of several plungers (2,2') for each section (36), in addition to the respective data record for the plunger holder (22) or the data records for the plunger holders (22), except for a first plunger (2), for each of the plungers (2') a data record for a profile (99,99',99") is provided to move the plunger (2') relative to its plunger holder (22).

10. Method as claimed in any one of the preceding claims,
**characterized in that** if, in addition, the axial position of a restrictor pipe (7) of the feeder head (3) is regulated in order to compensate for the effects of changes in the viscosity of the molten glass or changes in the glass level (17, 18) in the feeder head (3) upon the mass of the glass containers to be produced, a real mean value is formed from the mass reference value differences of all gobs of a machine cycle and this mean value is approximated to the value zero by changing the axial position of the restrictor pipe (7) between two respective cycles and furthermore, the mass reference value differences are scaled in such a manner that a fictitious mean value of zero is produced from the scaled mass reference value differences and the change in the plunger movement profiles (A,B,C,D) is performed on the basis of the scaled mass reference value differences.

11. Device (1) for controlling the glass gob mass in the production of hollow glass containers by means of a glass forming machine (36), comprising at least one plunger (2,2'), which is disposed in a feeder head (3) of a feeder (4), and means (22,23,26) for moving the at least one plunger (2,2') upwards and downwards, wherein a movement profile (A,B,C,D) for the plunger movement is stored in a control unit (71) of the device (1), said movement profile being changeable in order to influence the discharge of molten glass from the feeder head (3),
**characterized in that** the glass forming machine is an IS (Individual Section) glass forming machine (36) and for the simultaneous production of an assortment of hollow glass containers of a different weight a changeable movement profile (A,B,C,D) for each plunger (2,2') can be stored in the control unit (71) for each section (36) of the IS glass forming machine,
the device (1) comprises means (67) to determine a mass reference value difference from a mass reference desired value and a measured mass reference actual value on the basis of at least one of consecutive gobs for each preform station (35) of each section (36),
and the control unit (71) is connected via a data line (72) to the means (67) for determining the mass reference value difference and is designed, in dependence upon the determined mass reference value difference for each preform station (35), to change the associated plunger movement profile (A,B,C,D) such that by virtue of subsequent repetition of the determination of the mass reference value difference with subsequent change to the movement profile (A,B,C,D) the mass reference actual value is approximated stepwise to the mass reference desired value.

12. Device as claimed in claim 11,
**characterized in that** the device (1) is designed, after each completed machine cycle to carry out a check for each preform station (35) to verify whether the mass reference value difference is above a threshold value and if this is the case, to adapt the plunger movement profile (A,B,C,D) for the preform station (35).

13. Device as claimed in claim 11 or 12,
**characterized in that** the device (1) is designed to change the plunger movement profiles (A,B,C,D), by changing one parameter or several parameters in combination with each other from the group consisting of standstill period (85,86) of the respective plunger (2,2') in its lower (y1;yc1,yd1) and/or upper (y2) end position, duration (87,88) of the downwards and/or upwards movement of the plunger (2,2'), speed structure of the downwards and/or upwards movement of the plunger (2,2'), plunger stroke (98,98',98",99,99',99") and position (98,98',98",99,99',99") of the plunger stroke relative to an orifice ring (6) of the feeder head (3).

14. Device as claimed in any one of claims 11 to 13,
**characterized in that** the device (1) comprises at least one substantially horizontally extending plunger holder (22) and each plunger movement profile is determined by a data record, which is stored in the control unit (71), for an associated movement profile (A,B,C,D) of the plunger holder (22).

15. Device as claimed in claim 14,
**characterized in that** all of the plungers (2,2') are jointly attached to a plunger holder (22) and the control unit is a drive controller (71) of the plunger holder (22).

16. Device as claimed in claim 14 or 15,
**characterized in that** the device (1) comprises several plungers (2, 2') and for each section (36) in addition to the respective data record for the plunger holder (22) or the data records for the plunger holders (22), except for a first plunger (2), for each of the plungers (2') a data record for a profile (99,99',99") to move the plunger (2') relative to its plunger holder (22) by means of a height adjusting device (26) can be stored in an associated drive controller (71).

17. Device as claimed in any one of claims 11 to 16,
**characterized in that** if, in addition, a control circuit for the axial position of a restrictor pipe (7) of the feeder head (3) is provided for the purpose of compensating for the effects of changes in the viscosity of the molten glass or of changes in the glass level in the feeder head (3) upon the mass of the glass containers to be produced, the device (1) is designed to form a real mean value from the mass reference value differences of all gobs of a machine cycle and to approximate this mean value to the value zero by changing the axial position of the restrictor pipe (7) between two respective machine cycles and furthermore to scale the mass reference value difference in such a manner that a fictitious mean value of zero is produced from the scaled mass reference value differences, and to perform the change in the plunger movement profiles (A,B,C,D) on the basis of the scaled mass reference value differences.

## Revendications

1. Procédé pour la régulation de la masse de paraisons lors de la fabrication de récipients en verre creux au moyen d'une machine à mouler le verre (36), dans lequel au moins un piston (2, 2') est disposé dans un distributeur (3) d'un dispositif d'alimentation (4) et il est prévu, pour le mouvement vertical vers le haut et le bas du piston (2, 2') au nombre d'un au moins, un profil de mouvement (A,B,C,D) qui peut être modifié pour influer sur l'écoulement de verre en fusion liquide hors du distributeur (3),
**caractérisé en ce que** la machine à mouler le verre est une machine à mouler le verre I.S. (à sections individuelles) (36) et, pour la fabrication simultanée d'un assortiment de récipients en verre creux de poids différents, il est prévu pour chaque section (36) de la machine à mouler le verre à sections individuelles un profil de mouvement (A,B,C,D) modifiable par piston (2,2'),
une différence de valeur de référence de masse est déterminée à partir d'une valeur de consigne de référence de masse et d'une valeur réelle de référence de masse mesurée sur la base d'au moins une des paraisons successives pour chaque poste de préformage (35) de chaque section (36),
le profil de mouvement (A,B,C,D) du piston est modifié pour chaque poste de préformage (35) en fonction de la différence de valeur de référence de masse déterminée pour celui-ci, de telle sorte qu'en répétant ensuite la détermination de la différence de valeur de référence de masse et en modifiant ensuite le profil de mouvement (A,B,C,D), la valeur réelle de référence de masse est progressivement rapprochée de la valeur de consigne de référence de masse.

2. Procédé selon la revendication 1, **caractérisé en ce qu'**après chaque cycle de machine complet le système vérifie pour chaque poste de préformage (35) si la différence de valeur de référence de masse dépasse un seuil et, si c'est le cas, le profil de mouvement (A,B,C,D) du piston est adapté pour le poste de préformage (35)

3. Procédé selon la revendication 1 ou 2, **caractérisé en ce que** la durée d'arrêt (85,86) du piston (2,2') dans sa position de fin de course inférieure (y1 ; yc1, yd1) et/ou supérieure (y2) est modifiée.

4. Procédé selon l'une ou l'ensemble des revendications précédentes, **caractérisé en ce que** la durée (87, 88) du mouvement vers le bas et/ou vers le haut du piston (2,2') est modifiée.

5. Procédé selon l'une ou l'ensemble des revendications précédentes, **caractérisé en ce que** la courbe de vitesse pour le mouvement vers le bas et/ou vers le haut du piston (2,2') est modifiée.

6. Procédé selon l'une ou l'ensemble des revendications précédentes, **caractérisé en ce que** la course du piston (98, 98', 98", 99, 99', 99") est modifiée.

7. Procédé selon l'une ou l'ensemble des revendications précédentes **caractérisé en ce que** la position (98, 98', 98", 99, 99', 99") de la course du piston par rapport à une bague pare-gouttes (6) du distributeur (3) est modifiée.

8. Procédé selon l'une ou l'ensemble des revendications précédentes, **caractérisé en ce qu'**il est prévu au moins un porte-pistons (22) sensiblement horizontal et chaque profil de mouvement de piston est déterminé par un ensemble de données pour un profil de mouvement (A,B,C,D) correspondant du porte-pistons (22).

9. Procédé selon la revendication 8, **caractérisé en ce que**, lorsqu'il existe plusieurs pistons (2,2') par section (36), il est prévu en complément de l'ensemble de données correspondant pour le porte-pistons (22) ou des ensembles de données pour les porte-pistons (22), un ensemble de données pour un profil (99, 99', 99") pour chacun des pistons (2'), à l'exception d'un premier piston (2), pour le déplacement du piston (2') par rapport à son porte-piston (22).

10. Procédé selon l'une ou l'ensemble des revendications précédentes, **caractérisé en ce que** lorsque, en complément de la position axiale d'un tube d'étranglement (7) du distributeur (3), la compensation des effets de la modification de la viscosité du verre fondu liquide ou des modifications du niveau du verre (17, 18) dans le distributeur (3) est régulée en fonction de la masse des récipients en verre à fabriquer, une moyenne réelle est calculée à partir des différences de valeur de référence de masse de toutes les paraisons d'un cycle de la machine et celle-ci est rapprochée de zéro par la modification de la position axiale du tube d'étranglement (7) entre deux cycles de la machine, et les différences de valeur de référence de masse sont en outre cadrées de façon à obtenir à partir des différence de valeur de référence de masse cadrées une moyenne fictive de zéro, et la modification des profils de mouvement (A,B,C,D) des pistons est effectuée sur la base des différences de référence de masse cadrées.

11. Dispositif (1) pour la régulation de la masse de paraisons lors de la fabrication de récipients en verre creux au moyen d'une machine à mouler le verre (36), possédant au moins un piston (2, 2') disposé dans un distributeur (3) d'un dispositif d'alimentation (4) et des moyens (22, 23, 26) pour le mouvement vertical vers le haut et le bas du piston (2, 2') au nombre d'un au moins, un profil de mouvement (A,B,C,D) pour le mouvement du piston qui peut être modifié pour influer sur l'écoulement de verre en fusion liquide hors du distributeur (3) étant enregistré dans une unité de commande (71) du dispositif (1),
**caractérisé en ce que** la machine à mouler le verre est une machine à mouler le verre I.S. (à sections individuelles) (36) et, pour la fabrication simultanée d'un assortiment de récipients en verre creux de poids différents, un profil de mouvement (A,B,C,D) modifiable par piston (2,2'), peut être enregistré dans l'unité de commande (71) pour chaque section (36) de la machine à mouler le verre à sections individuelles.
Le dispositif (1) présente des moyens (67) pour déterminer une différence de valeur de référence de masse à partir d'une valeur de consigne de référence de masse et d'une valeur réelle de référence de masse mesurée sur la base d'au moins une des paraisons successives pour chaque poste de préformage (35) de chaque section (36),
et l'unité de commande (71) est reliée par une ligne de données (72) avec les moyens (67) pour déterminer la différence de valeur de référence de masse et elle est conçue pour modifier le profil de mouvement (A,B,C,D) du piston pour chaque poste de préformage (35) en fonction de la différence de valeur de référence de masse déterminée pour celui-ci, de telle sorte qu'en répétant ensuite la détermination de la différence de valeur de référence de masse et en modifiant ensuite le profil de mouvement (A,B,C,D), la valeur réelle de référence de masse est progressivement rapprochée de la valeur de consigne de référence de masse.

12. Dispositif selon la revendication 11, **caractérisé en ce que** le dispositif (1) est conçu pour vérifier, après chaque cycle de machine complet et pour chaque poste de préformage (35), si la différence de valeur de référence de masse dépasse un seuil et, si c'est le cas, pour adapter le profil de mouvement (A,B,C,D) du piston pour le poste de préformage (35).

13. Dispositif selon la revendication 11 ou 12, **caractérisé en ce que** le dispositif (1) est conçu pour modifier les profils de mouvement du piston (A,B,C,D) en modifiant un paramètre ou une combinaison de plusieurs paramètres dans le groupe comprenant la durée d'arrêt (85, 86) de chaque piston (2,2') dans sa position de fin de course inférieure (y1 ; yc1, yd1) et/ou supérieure (y2), la durée (87, 88) du mouvement vers le bas et/ou vers le haut du piston (2,2'), la courbe de vitesse du mouvement vers le bas et/ou vers le haut du piston (2,2'), la course du piston (98, 98', 98", 99, 98', 99") et la position (98, 98', 98", 99, 99', 99") de la course du piston par rapport à une bague pare-gouttes (6) du distributeur (3).

14. Dispositif selon l'une ou l'ensemble des revendications 11 à 13, **caractérisé en ce que** le dispositif (1) présente au moins un porte-pistons (22) sensiblement horizontal et chaque profil de mouvement de piston est déterminé par un ensemble de données mémorisé dans l'unité de commande (71) pour un profil de mouvement (A,B,C,D) correspondant du porte-pistons (22).

15. Dispositif selon la revendication 14, **caractérisé en ce que** tous les pistons (2,2') d'un porte-pistons (22) sont fixés ensemble et l'unité de commande est une commande d'entraînement (71) du porte-pistons (22).

16. Dispositif selon la revendication 14 ou 15, **caractérisé en ce que** le dispositif (1) comprend plusieurs pistons (2,2') et pour chaque section (36), en complément de l'ensemble de données du porte-pistons (22) ou des ensembles de données pour les porte-pistons (22), un ensemble de données peut être mémorisé dans une commande d'entraînement (71) correspondante pour chacun des pistons (2'), à l'exception d'un premier piston (2), pour un profil (99, 99', 99") pour le déplacement du piston (2') par rapport à son porte-pistons (22) au moyen d'un dispositif de réglage de la hauteur (26).

17. Dispositif selon l'une ou l'ensemble des revendications 11 à 16, **caractérisé en ce que** le dispositif (1) est conçu pour, lorsqu'il est prévu en outre un circuit de régulation pour la position axiale d'un tube d'étranglement (7) du distributeur (3) en vue de la compensation des effets des variations viscosité du verre fondu liquide ou des modifications du niveau du verre dans le distributeur (3) en fonction de la masse des récipients en verre à fabriquer, calculer une moyenne réelle à partir des différences de valeur de référence de masse de toutes les paraisons d'un cycle de la machine et rapprocher celle-ci de zéro en modifiant la position axiale du tube d'étranglement (7) entre deux cycles de la machine, et pour cadrer en outre les différences de valeur de référence de masse de façon à obtenir, à partir des différence de valeur de référence de masse cadrées, une moyenne fictive de zéro, et pour modifier les profils de mouvement (A,B,C,D) des pistons sur la base des différences de référence de masse cadrées.
